# EUROPEAN PATENT APPLICATION

(11) **EP 4 825 270 A1**
(43) Date of publication of application: **21.10.2026**
(21) Application number: 24903008.1
(22) Date of filing: 16.12.2024
(51) Int. Cl.: A47C 27/06, A47C 27/045

(54) **ASSEMBLED BASE FOR PLACING SPRING MODULES, AND ELASTIC PAD**

(30) Priority: 14.12.2023 CN 202311720556; 25.06.2024 CN 202410831206
(71) Applicant: New-Tec Integration (Xiamen) Co., Ltd., Xiamen, Fujian 361100 (CN)
(72) Inventor: LENG, Luhao, Xiamen, Fujian 361100 (CN)
(74) Representative: Verscht, Thomas Kurt Albert
(86) International application number: PCT/CN2024/139475
(87) International publication number: WO 2025/124593

(57) **Abstract**

An assembled base (1) for placing spring modules, comprising: unit plates (11) and connecting members (12) for connecting the unit plates (11). A plurality of connecting mating members (13) are arranged on the unit plates (11) at symmetrical positions, and the two connecting mating members (13) arranged at the symmetrical positions are rotationally symmetrical; each connecting member (12) comprises an operating member (121) and a limiting column (122) placed in an arc-shaped groove; the operating member (121) is used for driving the limiting column (122) to move between a first position and a second position relative to the arc-shaped groove; two limiting columns (122) are arranged, and an included angle of 180° is formed between the two limiting columns (122); when being located at the first position, the two limiting columns (122) are respectively located at the release ends (132) of the arc-shaped grooves in the two unit plates (11); and when being located at the second position, the two limiting columns (122) are respectively located at the limiting ends (131) of the arc-shaped grooves in the two unit plates (11), and are in limiting fit with the limiting ends (131) in a direction opposite to the direction where the limiting columns (122) are inserted into the arc-shaped grooves. An elastic pad, comprising a base (1) and spring modules (2), wherein the spring modules (2) are arranged on the base (1) in an array, and the base (1) is the assembled base (1).

## Description

### CROSS-REFERENCE TO RELATED APPLICATIONS

This application claims priority to:
Chinese Patent Application No. 202311720556.3, entitled "An elastic pad", filed with the China National Intellectual Property Administration on December 14, 2023;
Chinese Patent Application No. 202410831206.2, entitled "An interconnectable base for placing spring modules and an elastic pad", filed with the China National Intellectual Property Administration on June 25, 2024;
The contents of these Chinese patent applications are incorporated herein by reference.

### FIELD OF THE DISCLOSURE

The present disclosure relates to furniture, and in particular relates to an elastic pad.

### BACKGROUND OF THE DISCLOSURE

Furniture, such as beds and sofa beds is an indispensable part of daily life of people. Most existing beds and sofa beds are equipped with elastic pads. The elastic pads with certain elasticity can provide a certain elastic support when a person lies on a bed or sofa bed, offering better comfort than hard pads.

Existing elastic pads are generally a unitary, non-detachable and enclosed integral pad composed of a single bottom layer, a spring layer, a laminated foam layer and a closed perimeter skirt, that is, the spring layer is disposed on the bottom layer, the laminated foam layer is disposed on the spring layer, and the closed perimeter skirt connects the laminated foam layer and the bottom layer to form an enclosed space.

However, such elastic pads usually have poor comfort. In addition, such elastic pads are costly and exhibit poor stability in practical use, thus reducing comfort, are inconvenient to transport, and occupy large storage space.

### BRIEF SUMMARY OF THE DISCLOSURE

The primary technical problem to be solved by the present disclosure is to provide a base for placing spring modules, which can be freely interconnected.

In order to solve the aforementioned technical problems, the present disclosure provides an interconnectable base for placing spring modules, it comprises: plate units and connecting members for connecting the plate units;

The plate units are disposed with coupling members adapted to the connecting members; and multiple ones of the coupling members are disposed at symmetrical positions on the plate units, and two of the coupling members at the symmetrical positions are rotationally symmetrical;

The coupling members comprise arcuate slots, and the arcuate slots are divided into limiting ends and release ends; a connecting member comprises an operating member and limiting posts disposed in the arcuate slots; the operating member is configured to drive the limiting posts to move relative to the arcuate slots between a first position and a second position; and two of the limiting posts form a 180° angle;

When the limiting posts are in the first position, the two of the limiting posts are respectively located at the release ends of the arcuate slots of two of the plate units; and when the limiting posts are in the second position, the two of the limiting posts are respectively located at the limiting ends of the arcuate slots of the two of the plate units and are in limiting engagement with the limiting ends in a direction opposite to an insertion direction of the limiting posts into the arcuate slots;

The spring modules in equal or different quantities are disposed on different ones of the plate units.

In a preferred embodiment, the limiting posts comprise first portions and second portions; a width of the first portions is smaller than a width of the limiting ends; a width of the second portions is larger than the width of the limiting ends but smaller than a width of the release ends.

In a preferred embodiment, the operating member comprises a mounting base and a handle disposed on an upper surface of the mounting base; and the limiting posts are disposed on a lower surface of the mounting base.

In a preferred embodiment, the plate units are divided into horizontal plate units and vertical plate units; the horizontal plate units are respectively disposed with the coupling members on both sides along a length direction; and the vertical plate units are respectively disposed with the coupling members on both sides along a width direction and both sides along a length direction.

In a preferred embodiment, the horizontal plate units and the vertical plate units are respectively disposed with connecting posts for securing the spring modules.

In a preferred embodiment, the horizontal plate units and the vertical plate units are further divided into peripheral plate units and inner plate units according to installation positions; and the peripheral plate units are disposed with connecting posts for securing the spring modules.

In a preferred embodiment, a plurality of ribs are circumferentially disposed on a side surface of a connecting post; and the ribs are configured to have a limiting engagement with a spring module about an axial direction of the connecting post.

In a preferred embodiment, upper end surfaces of the ribs have guide slopes.

In a preferred embodiment, the plate units are respectively disposed with the coupling members on both sides along a width direction and both sides along a length direction.

The present disclosure further discloses an elastic pad, it comprises a base and spring modules; the spring modules are disposed in an array on the base; the base is the interconnectable base.

Compared with the existing techniques, the technical solution of the present disclosure has the following advantages.

The interconnectable base for placing the spring modules provided by the present disclosure allows two plate units to be connected by a connecting member, and a desired base can be easily interconnected by selecting an appropriate number and type of the plate units. Moreover, the base can be transported and packaged in a stacked form of the plate units, which significantly reduces packaging and transportation volume.

### BRIEF DESCRIPTION OF THE DRAWINGS

FIG. 1 is a schematic view of spring modules disposed on a base in Embodiment 1 of the present disclosure;
FIG. 2 is a schematic view of the base in Embodiment 1 of the present disclosure;
FIG. 3 is a perspective view of the base being assembled in Embodiment 1 of the present disclosure;
FIG. 4 is a top view of the base being assembled in Embodiment 1 of the present disclosure;
FIG. 5 is a partial enlarged view of FIG. 3;
FIG. 6 is a perspective view of a connecting member in Embodiment 1 of the present disclosure;
FIG. 7 is a perspective view of the connecting member from another angle in Embodiment 1 of the present disclosure;
FIG. 8 is a schematic view of a horizontal plate unit in Embodiment 1 of the present disclosure;
FIG. 9 is a schematic view of a vertical plate unit in Embodiment 1 of the present disclosure;
FIG. 10 is a perspective view of a base being assembled in Embodiment 2 of the present disclosure;
FIG. 11 is a top view of a plate unit used in Embodiment 2 of the present disclosure;
FIG. 12 is a top view of a base being assembled in Embodiment 3 of the present disclosure;
FIG. 13 is a top view of a plate unit used in Embodiment 3 of the present disclosure;
FIG. 14 is a top view of a base being assembled in Embodiment 4 of the present disclosure; and
FIG. 15 is a top view of a plate unit used in Embodiment 4 of the present disclosure.

### DETAILED DESCRIPTION OF THE EMBODIMENTS

The technical solutions in the embodiments of the present disclosure will be clearly and completely described below in combination with the accompanying drawings in the embodiments of the present disclosure; and it is obvious that the described embodiments are only some embodiments of the present disclosure instead of all embodiments, and all other embodiments fall within the protection scope of the present disclosure provided that they are obtained by a person of ordinary technical skill in the art based on the embodiments of the present disclosure without creative works.

In the description of the present disclosure, it should be noted that terms, such as "upper", "lower", "inner", "outer", "top/bottom", indicate orientations or positional relationships based on orientations or positional relationships shown in the accompanying drawings, which are merely used to easily describe the present disclosure and simplify the description, rather than indicating or implying that a referred device or element should have a particular orientation or be constructed and operated with a particular orientation, and therefore should not to be understood as a limitation of the present disclosure. Furthermore, the terms "first" and "second" are merely used for description and should not be understood as indicating or implying relative importance.

In the description of the present disclosure, unless otherwise expressly specified and limited, it should be noted that terms, such as "mounted", "provided with", "socketed/sleeved", and "connected", should be construed broadly, for example, "connection" can be a wall-mounted connection, a detachable connection, a one-piece connection, a mechanical connection, an electrical connection, a direct connection, an indirect connection via an intermediate medium, or a communication between inner portions of two elements, and the specific meaning of the terms in the present disclosure can be understood in specific conditions for those of ordinary skill in the art.

### EMBODIMENT 1

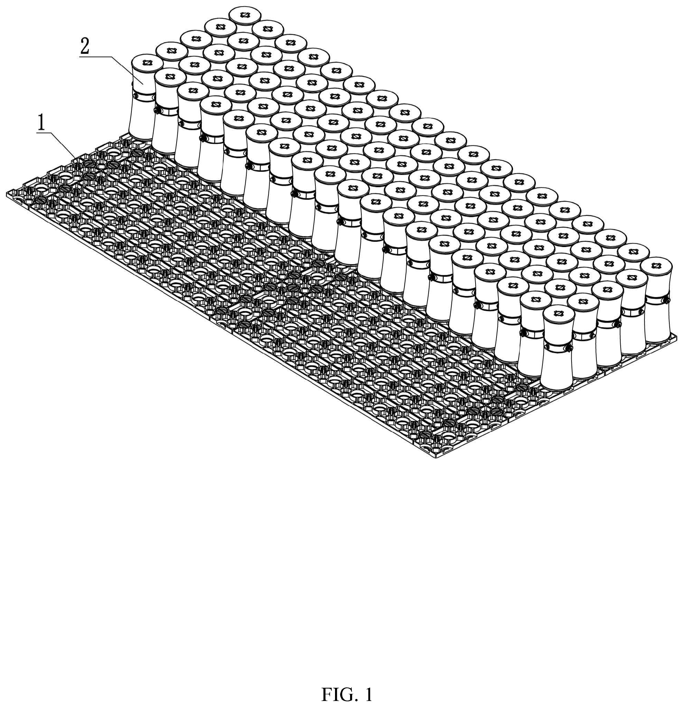

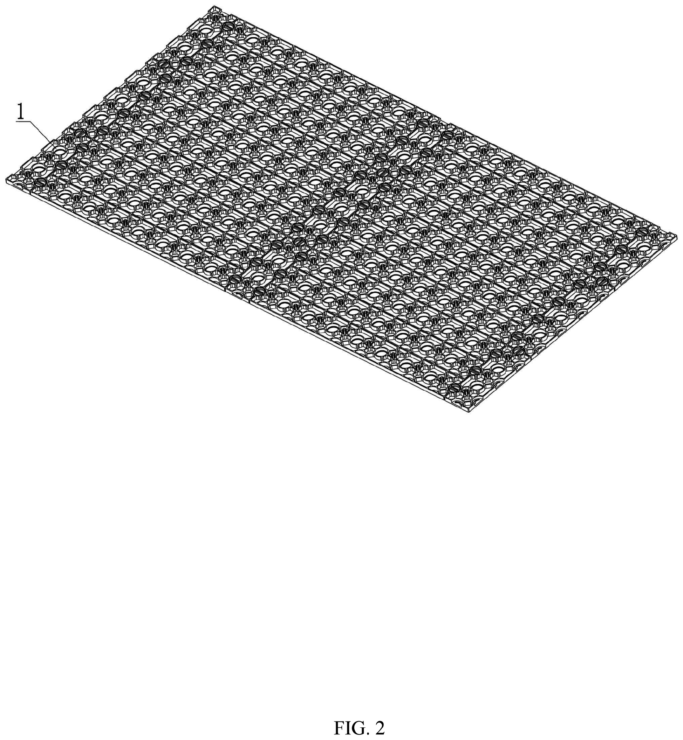

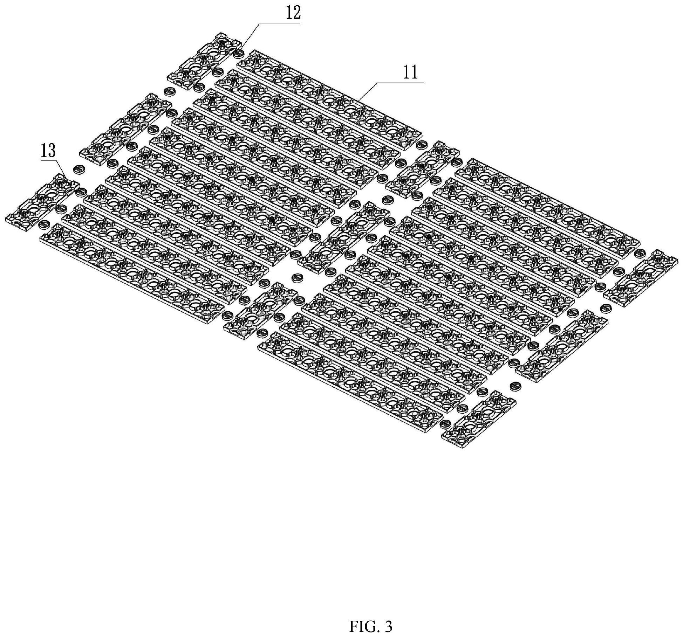

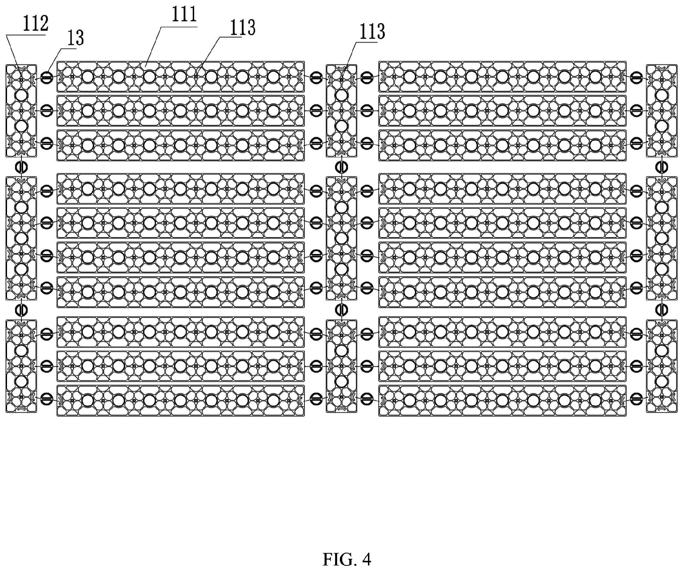

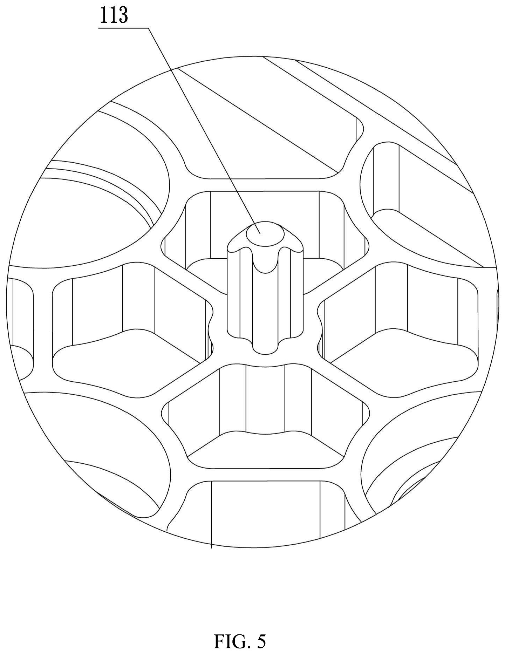

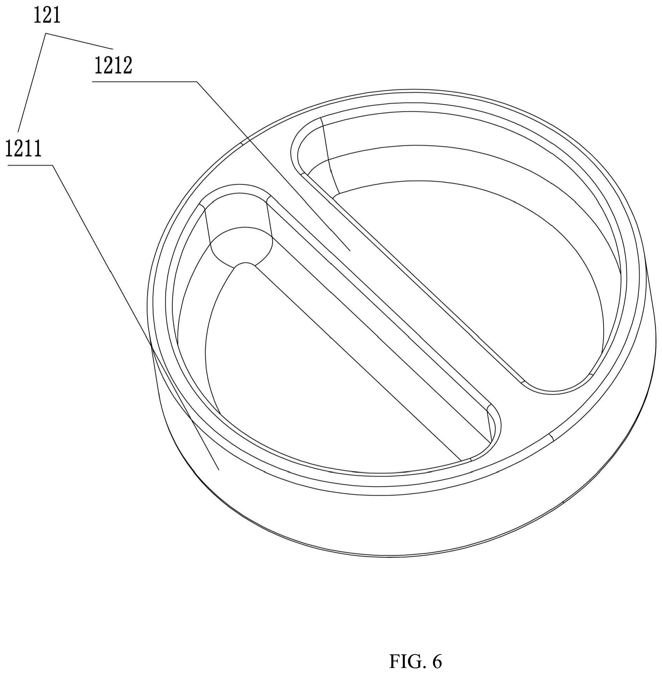

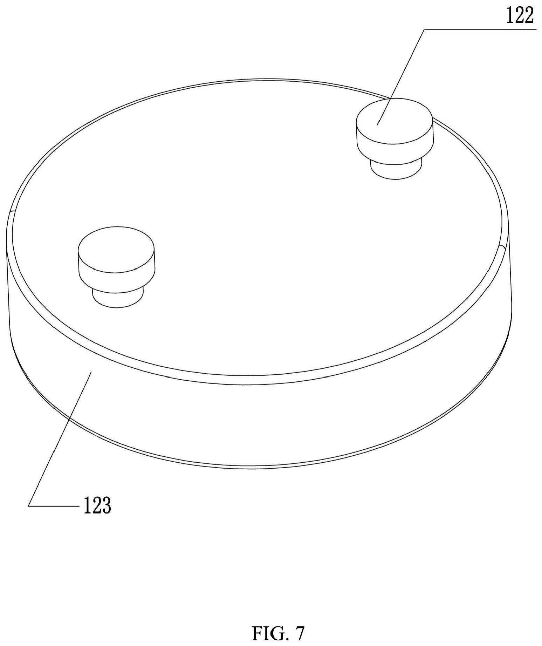

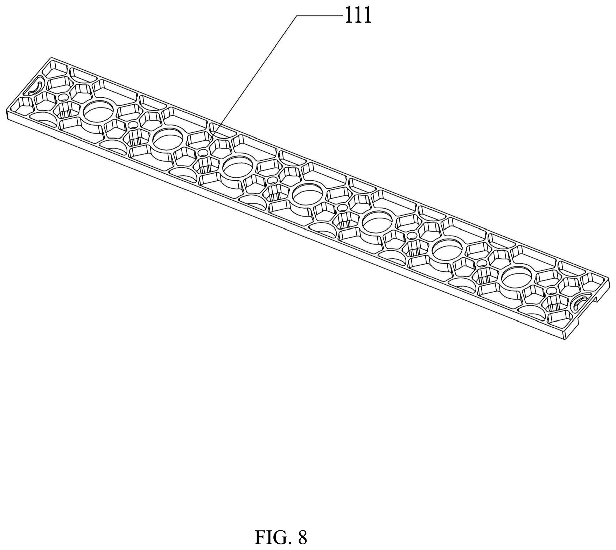

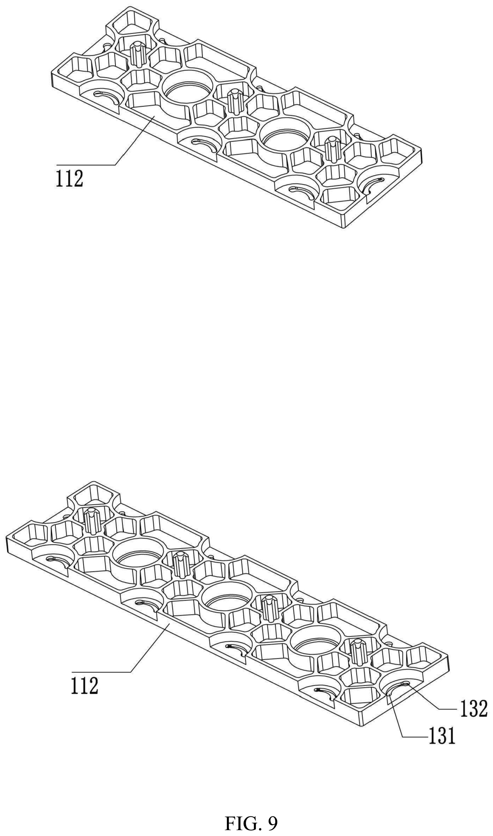

Referring to FIGS. 1-9, this embodiment provides an elastic pad comprising a base 1 and spring modules 2; and the spring modules 2 are disposed in an array on the base 1.

The base 1 in this embodiment is an interconnectable base 1, which comprises plate units 11 and connecting members 12 for connecting the plate units 11; coupling members 13 adapted to the connecting members 12 are disposed on the plate units 11; multiple ones of the coupling members 13 are disposed at symmetrical positions on the plate units 11, and two of the coupling members 13 at the symmetrical positions are rotationally symmetrical; the coupling member 13 comprise arcuate slots, and the arcuate slots are divided into limiting ends 131 and release ends 132; a connecting member 12 comprises an operating member 121 and limiting posts 122 disposed in the arcuate slots; the operating member 121 is configured to drive the limiting posts 122 to move relative to the arcuate slots between a first position and a second position; two of the limiting posts 122 form a 180° angle; when the limiting posts 122 are in the first position, the two of the limiting posts 122 are respectively disposed at the release ends 132 of the arcuate slots on two of the plate units 11; and when the limiting posts 122 are in the second position, the two of the limiting posts 122 are respectively disposed at the limiting ends 131 of the arcuate slots on the two of the plate units 11 and are in limiting engagement with the limiting ends 131 in a direction opposite to an insertion direction of the limiting posts 122 into the arcuate slots.

As the coupling members 13 at symmetrical positions on the plate units 11 are rotationally symmetrical, when the two of the plate units 11 are connected, two of the coupling members 13 that are rotationally symmetrical can be arranged opposite to each other, the two of the limiting posts 122 of the connecting member 12 are then respectively inserted into the arcuate slots via the release ends 132, and the operating member 121 drives the limiting posts 122 to rotate from the first position to the second position, thereby connecting the two of the plate units 11. In the interconnectable base 1, the two of the plate units 11 can be connected by the connecting member 12, and the desired base 1 can be easily interconnected by selecting an appropriate number and type of the plate units 11. Moreover, the base 1 can be transported and packaged in a stacked form of the plate units 11, which significantly reduces packaging and transportation volume.

To achieve limiting engagement between the limiting posts 122 and the limiting ends 131, the limiting posts 122 comprise first portions and second portions, and the width of the first portions is smaller than a width of the limiting ends 131; and a width of the second portions is larger than the width of the limiting ends 131 but smaller than a width of the release ends 132. Thus, when the limiting posts 122 move to the second position, the width of the second portions is larger than the width of the limiting ends 131, enabling limiting engagement between the second portions and the limiting ends 131 in the insertion direction of the limiting posts 122 into the arcuate slots.

For user convenience, the operating member 121 comprises a mounting base 1211 and a handle 1212 disposed on an upper surface of the mounting base 1211, and the limiting posts 122 are disposed on a lower surface of the mounting base 1211. In addition, the mounting base 1211 is cylindrical, and the coupling members 13 correspondingly comprise chambers 133 adapted to the mounting base 1211, with the arcuate slots disposed at bottoms of the chambers 133.

In this embodiment, the plate units 11 are divided into horizontal plate units 111 and vertical plate units 112; the horizontal plate units 111 are disposed with the coupling members 13 on both sides along a length direction; and the vertical plate units 112 are disposed with coupling members 13 on both sides along a width direction and both sides along the length direction.

In this embodiment, a horizontal plate unit 111 can mount eight of the spring modules 2, and a vertical plate unit 112 can mount three or four of the spring modules 2, during assembly, eleven of the horizontal plate units 111 are arranged side by side, and the vertical plate units 112 are connected to both sides of the horizontal plate units 111, and the vertical plate units 112 include two of the vertical plate units capable of mounting three of the spring modules 2 and one of the vertical plate units capable of mounting four of the spring modules 2. The number of the plate units 11 can be increased or decreased as required, and is not limited to this embodiment.

In this embodiment, the horizontal plate units 111 and the vertical plate units 112 are respectively disposed with connecting posts 113 for securing the spring modules 2. In addition, a plurality of ribs are circumferentially disposed on a side surface of a connecting post 113; and the ribs are configured to have a limiting engagement with the spring module 2 about an axial direction of the connecting post. Thus, after the connecting posts are connected to the spring modules 2 by insertion, the limiting engagement is formed both in the insertion direction and about the connecting posts, securing the spring modules 2 to the base 1.

For easy insertion, upper end surfaces of the ribs have guide slopes.

### Embodiment 2

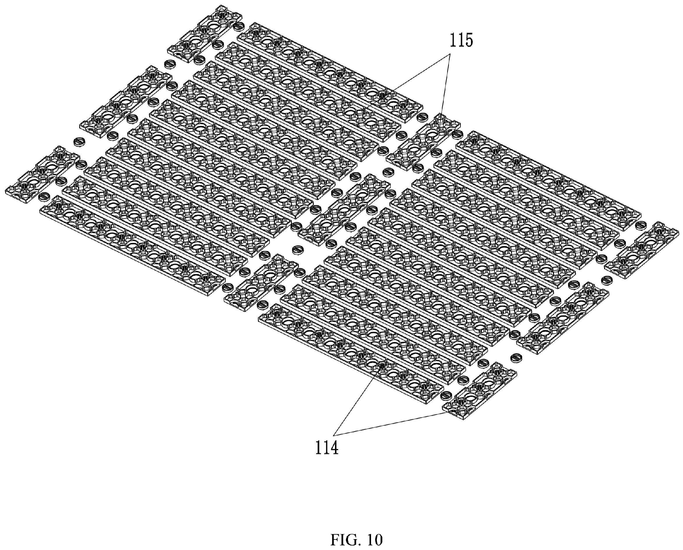

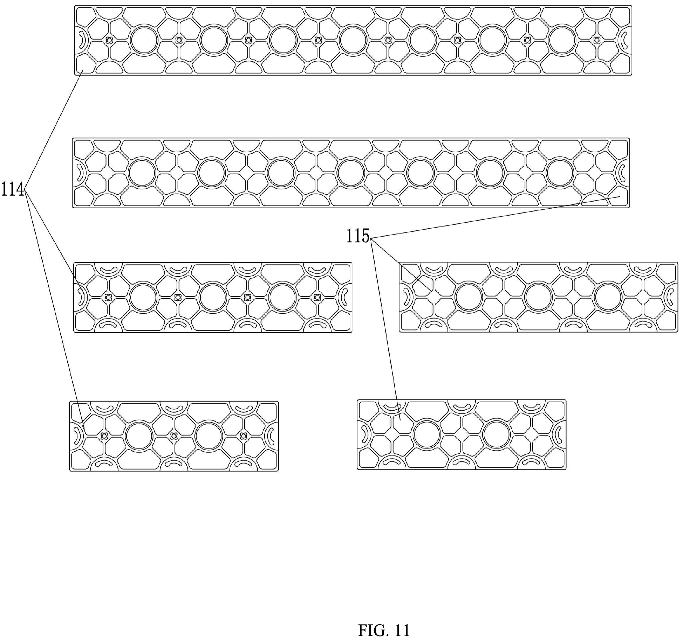

Referring to FIGS. 10 and 11, this embodiment differs from Embodiment 1 in that each of the spring modules 2 is corresponding connected to one of the connecting posts in Embodiment 1. The horizontal plate units 111 and the vertical plate units 112 are further divided into peripheral plate units 114 and inner plate units 115 according to installation positions; and the peripheral plate units 114 are disposed with the connecting posts for securing the spring modules 2. Thus, only the spring modules 2 on an outermost ring are connected by insertion, and other ones of the spring modules 2 can be secured to the base 1 by being directly or indirectly connected to the spring modules 2 via the connecting members 12.

### Embodiment 3

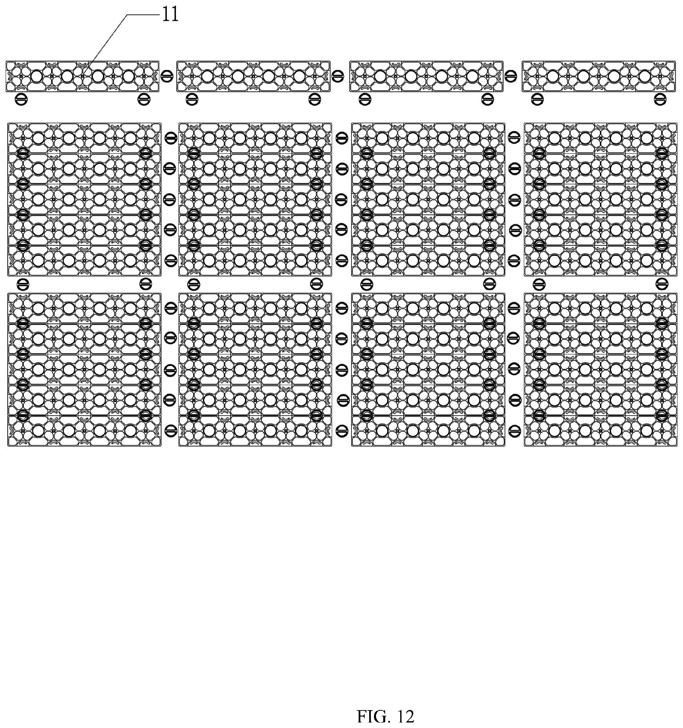

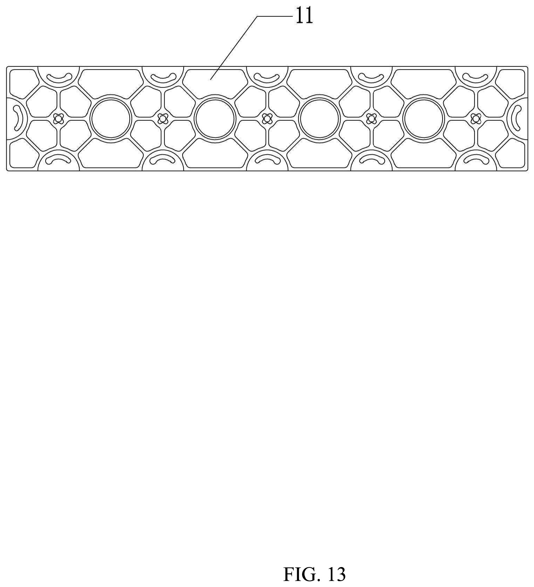

Referring to FIGS. 12 and 13, this embodiment uses the plate units 11 having uniform specification, a plate unit 11 is capable of mounting four of the spring modules 2, and the plate unit 11 is respectively disposed with the coupling members 13 on both sides along the width direction and both sides along the length direction.

### Embodiment 4

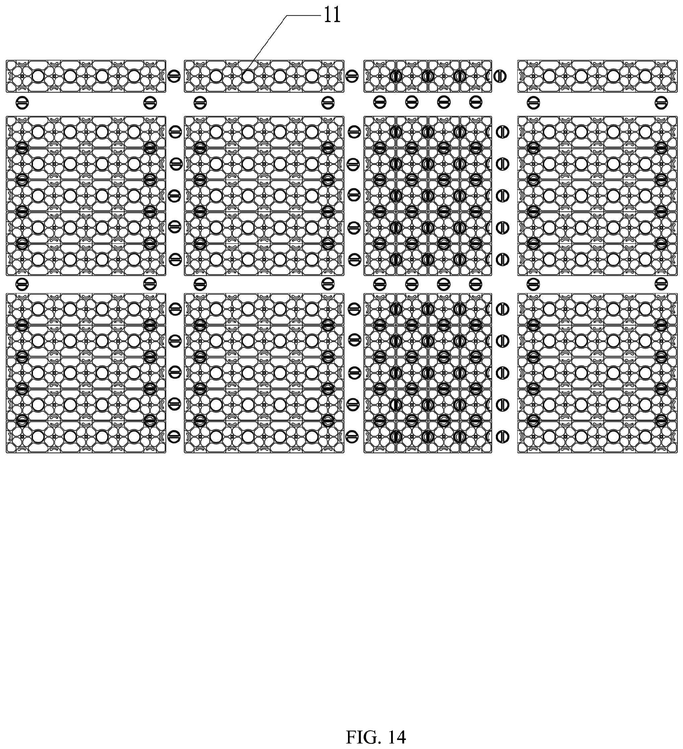

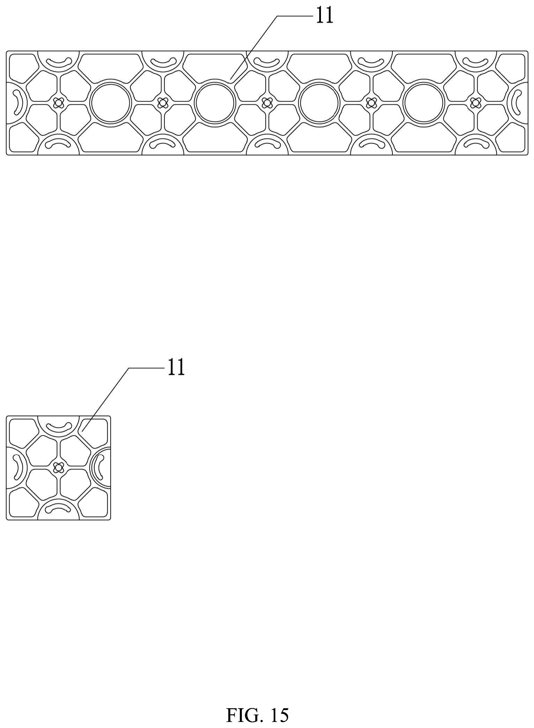

Referring to FIGS. 14 and 15, this embodiment adds a plate unit 11 on the basis of Embodiment 3, the plate unit can only mount one of the spring modules 2. This plate unit 11 is also provided with the coupling members 13 on both sides along the width direction and both sides along the length direction.

The aforementioned description is only preferred specific embodiments of the present disclosure, but the design and the concept of the present disclosure is not limited thereto, any insubstantial modifications shall fall within the protection scope of the present disclosure provided that they are made using this concept by those of skill in the art within the technical scope disclosed by the present disclosure.

### INDUSTRIAL APPLICABILITY

The present disclosure provides interconnectable base for placing spring modules, it comprises: plate units and connecting members for connecting the plate units; and multiple coupling members are disposed at symmetrical positions on the plate units, and two of the coupling members at the symmetrical positions are rotationally symmetrical; a connecting member comprises an operating member and limiting posts configured to be disposed in arcuate slots; the operating member is configured to drive the limiting posts to move relative to the arcuate slots between a first position and a second position; and two of the limiting posts form a 180° angle; when the limiting posts are in the first position, the two of the limiting posts are respectively located at release ends of the arcuate slots of two of the plate units; and when the limiting posts are in the second position, the two of the limiting posts are respectively located at limiting ends of the arcuate slots of the two of the plate units and are in limiting engagement with the limiting ends in a direction opposite to an insertion direction of the limiting posts into the arcuate slots. The present disclosure further provides an elastic pad comprising a base and spring modules; the spring modules are arranged in an array on the base, and the base is the interconnectable base, which has industrial applicability.

## Claims

1. An interconnectable base for placing spring modules, **characterized in that**, it comprises: plate units and connecting members for connecting the plate units;
the plate units are disposed with coupling members adapted to the connecting members; and multiple ones of the coupling members are disposed at symmetrical positions on the plate units, and two of the coupling members at the symmetrical positions are rotationally symmetrical;
the coupling members comprise arcuate slots, and the arcuate slots are divided into limiting ends and release ends; a connecting member comprises an operating member and limiting posts configured to be disposed in the arcuate slots; the operating member is configured to drive the limiting posts to move relative to the arcuate slots between a first position and a second position; and two of the limiting posts form a 180° angle;
when the limiting posts are in the first position, the two of the limiting posts are respectively located at the release ends of the arcuate slots of two of the plate units; and when the limiting posts are in the second position, the two of the limiting posts are respectively located at the limiting ends of the arcuate slots of the two of the plate units and are in limiting engagement with the limiting ends in a direction opposite to an insertion direction of the limiting posts into the arcuate slots; and
the spring modules in equal or different quantities are disposed on different ones of the plate units.

2. The interconnectable base for placing the spring modules according to claim 1, **characterized in that**: the limiting posts comprise first portions and second portions; a width of the first portions is smaller than a width of the limiting ends; a width of the second portions is larger than the width of the limiting ends but smaller than a width of the release ends.

3. The interconnectable base for placing the spring modules according to claim 1, **characterized in that**: the operating member comprises a mounting base and a handle disposed on an upper surface of the mounting base; and the limiting posts are disposed on a lower surface of the mounting base.

4. The interconnectable base for placing the spring modules according to claim 1, **characterized in that**: the plate units are divided into horizontal plate units and vertical plate units; the horizontal plate units are respectively disposed with the coupling members on both sides along a length direction; and the vertical plate units are respectively disposed with the coupling members on both sides along a width direction and both sides along a length direction.

5. The interconnectable base for placing the spring modules according to claim 4, **characterized in that**: the horizontal plate units and the vertical plate units are respectively disposed with connecting posts for securing the spring modules.

6. The interconnectable base for placing the spring modules according to claim 4, **characterized in that**: the horizontal plate units and the vertical plate units are further divided into peripheral plate units and inner plate units according to installation positions; and the peripheral plate units are disposed with connecting posts for securing the spring modules.

7. The interconnectable base for placing the spring modules according to claim 5 or 6, **characterized in that**: a plurality of ribs are circumferentially disposed on a side surface of a connecting post; and the ribs are configured to have a limiting engagement with a spring module about an axial direction of the connecting post.

8. The interconnectable base for placing the spring modules according to claim 7, **characterized in that**: upper end surfaces of the ribs have guide slopes.

9. The interconnectable base for placing the spring modules according to claim 1, **characterized in that**: the plate units are respectively disposed with the coupling members on both sides along a width direction and both sides along a length direction.

10. An elastic pad, **characterized in that**, it comprises a base and spring modules; the spring modules are disposed in an array on the base; the base is the interconnectable base according to any of claims 1-9.
